# EUROPÄISCHE PATENTSCHRIFT

(11) **EP 2 791 747 B1**
(45) Veröffentlichungstag und Bekanntmachung des Hinweises auf die Patenterteilung: **07.09.2016**
(21) Anmeldenummer: 12809111.3
(22) Anmeldetag: 06.12.2012
(51) Int. Cl.: G05B 19/409

(54) **VERFAHREN ZUM UMSCHALTEN ZWISCHEN HINSICHTLICH DER BEDIENEREINGRIFFSANFORDERUNGEN VERSCHIEDENEN WERKSTÜCKBEARBEITUNGSBETRIEBSMODI EINER BEARBEITUNGSMASCHINE**
METHOD FOR SWITCHING BETWEEN WORK PIECE PROCESSING OPERATING MODES OF A PROCESSING MACHINE WHICH ARE DIFFERENT IN RESPECT OF OPERATOR INTERVENTION REQUIREMENTS
PROCÉDÉ PERMETTANT DE BASCULER, SUR UNE MACHINE D'USINAGE, ENTRE DES MODES DE FONCTIONNEMENT D'USINAGE DE PIÈCES LESQUELS SE DISTINGUENT EN CE QUI CONCERNE LES DEMANDES D'INTERVENTIONS D'OPÉRATEUR

(30) Priorität: 12.12.2011 DE 102011088220
(43) Veröffentlichungstag der Anmeldung: 22.10.2014
(73) Patentinhaber: Trumpf Werkzeugmaschinen GmbH + Co. KG, 71254 Ditzingen (DE)
(72) Erfinder: BAUER, Klaus, 71254 Ditzingen (DE); HUBER, Uwe, 74379 Ingersheim (DE); WAHL, Eberhard, 73235 Weilheim (DE)
(74) Vertreter: Kohler Schmid Möbus Patentanwälte
(86) Internationale Anmeldenummer: PCT/EP2012/005021
(87) Internationale Veröffentlichungsnummer: WO 2013/087163

(56) Entgegenhaltungen:
- EP-A2- 2 034 378
- DE-A1-102008 060 010
- JP-A- 6 206 150
- US-A1- 2010 138 031

## Beschreibung

Die vorliegende Erfindung betrifft ein Verfahren zum Umschalten zwischen verschiedenen Werkstückbearbeitungsbetriebsmodi einer Bearbeitungsmaschine gemäß Oberbegriff von Anspruch 1.

Ein derartiges Verfahren ist beispielsweise durch die EP 2 034 378 A1 bekannt geworden.

Heute werden Werkzeugmaschinen typischerweise unter Betreuung eines Bedieners genutzt. Zunehmend findet jedoch auch ein temporärer nicht-bedienerbetreuter Betrieb ("mannlos Betrieb") statt. Die Maschine wird dafür technisch durch verschiedene Ausprägungen für diesen Betrieb optimiert (z.B. Rüstreduktion wie Düsenwechsler oder Ein-Kopf-Strategie oder rüstoptimales Umsortieren des Produktionsplans). Beim Wechsel vom bedienerbetreuten, werkstückbearbeitenden Betrieb in den nicht-bedienerbetreuten, werkstückbearbeitenden Betrieb existieren jedoch teilweise sich widersprechende optimale Einstellungen/Betriebsarten. Das führt dazu, dass die Maschine bei häufigen Wechseln nicht optimal arbeitet, sondern dadurch zusätzliche Einstellarbeiten anfallen. Der hohe Aufwand des optimalen Wechsels führt zu reduzierter Flexibilität in der Nutzung ("der Maschinenbediener kann eben nicht kurz mal weg") oder zu suboptimalen Einstellungen ("der Maschinenbediener geht einfach trotzdem kurz mal weg und lässt die Maschine so weiterlaufen").

Die aus der EP 2 034 378 A2 bekannte Werkzeugmaschine weist eine Mehrzahl von Betriebsfunktionen (z.B. Automatikbetrieb, Einrichtbetrieb, Prozessbeobachtung und Servicebetrieb) und eine Auswahleinrichtung zur Auswahl einer oder mehrerer Betriebsfunktionen durch den Nutzer auf. Über eine Empfangseinrichtung empfängt die Werkzeugmaschine Daten von einem mobilen Datenträger, auf deren Basis festgestellt werden kann, welche Betriebsfunktionen vom Nutzer ausgeführt werden dürfen. Eine Zugriffssteuereinrichtung gewährt dabei dem Nutzer den Zugriff nur auf diejenigen ausgewählten Betriebsfunktionen, zu deren Ausführung er berechtigt ist.

Weiterhin ist aus der DE 10 2008 060 010 A1 eine Sicherheitssteuerung zum Steuem einer automatisierten Anlage, die eine Vielzahl von Sensoren und eine Vielzahl von Aktoren umfasst, mit einer Steuereinheit bekannt, der eine Vielzahl von Steuerungseingangssignalen von den Sensoren zugeführt sind. Die Steuereinheit ist dazu ausgebildet, in einem Automatikbetrieb eine Vielzahl von Steuerungsausgangssignalen in Abhängigkeit von den Steuerungseingangssignalen gemäß einem in ihr ablaufenden Anwenderprogramm zu erzeugen, wobei mit der Vielzahl von Steuerungsausgangssignalen die Vielzahl von Aktoren angesteuert werden. Ferner weist die Sicherheitssteuerung eine Diagnoseauswerteeinheit auf, der eine Anzahl von Diagnoseeingangssignalen zugeführt sind, wobei die Diagnoseauswerteeinheit dazu ausgebildet ist, in Abhängigkeit von der Anzahl von Diagnoseeingangssignalen festzustellen, welcher von mehreren Betriebszuständen zu einem definierten Zeitpunkt vorliegt. Die mehreren Betriebszustände beinhalten zumindest einen Prozesszustand der zu steuernden Anlage und zumindest einen Systemzustand der Sicherheitssteuerung, wobei die Diagnoseauswerteeinheit ein Betriebszustandssignal erzeugt, welches einen festgestellten Betriebszustand repräsentiert.

Demgegenüber ist es die Aufgabe der vorliegenden Erfindung, ein Verfahren zum Umschalten zwischen verschiedenen Werkstückbearbeitungsbetriebsmodi einer Bearbeitungsmaschine derart zu verbessern, dass in jedem Werkstückbearbeitungsbetriebsmodus ein möglichst optimaler Betrieb der Bearbeitungsmaschine sichergestellt werden kann.

Diese Aufgabe wird erfindungsgemäß durch ein Verfahren mit den Merkmalen von Anspruch 1 gelöst.

Erfindungsgemäß werden nicht Einzelelemente (z.B. Sitz oder Getriebe) auf komponentenseitige Spezifika hin zu einem Konfigurationssatz gebündelt, sondern es wird dem Maschinenbetreiber erstmals ermöglicht, pro Betriebsmodus spezifische Bearbeitungsvorgaben oder -strategien zu definieren und diese einfach umschaltbar zu machen; d.h. es handelt sich um Betriebsmodi zur Werkstückbearbeitung, kurz: Werkstückbearbeitungsbetriebsmodi. Dabei betreffen die Bearbeitungsstrategien das gesamte System. Die für die jeweilige Bearbeitungsstrategie erforderlichen Betriebseinstellungen (Parameter) der einzelnen Maschinenkomponenten sind zuvor definiert und z.B. in Tabellen gespeichert. Beim Umschalten in einen neuen Werkstückbearbeitungsbetriebsmodus werden die Maschinenkomponenten ohne Bedienereingriff auf die zuvor gespeicherte Bearbeitungsstrategie umgestellt bzw. umkonfiguriert. Zur Umsetzung der Bearbeitungsstrategien sind an der Maschine entsprechende Aktor/Sensorsysteme sowie Kommunikationsschnittstellen vorgesehen, welche die gewünschten Umstellungen bewirken.

Die Bearbeitungsstrategien können dabei beispielsweise umfassen:
- Materialhandling,
- Wartungs- und Reinigungszyklen,
- Kalibrierzyklen,
- Schwellwerte für Zustandsüberwachungen,
- Reaktionen bei Überschreitung von Alarmgrenzen (Warnungen, Fehlermeldungen),
- automatisches Wiederaufsetzen bei Fehlersituationen ("Retry"),
- automatische Anpassung der Auftragsreihenfolge im Produktionsplan,
- Prozessdurchführung (spezifische Beeinflussung der Prozesssicherheit),
- Kommunikation der Maschine bei detektierten Problemen,
- sofortige Machbarkeitsüberprüfung beim Umstellen in den neuen Betriebsmodus.

Erfindungsgemäß wird eine Rückmeldung an den Maschinenbediener gegeben, ob die Umschaltung erfolgreich erfolgt ist oder ob zur Finalisierung der Umschaltung noch Bedienereingriffe erforderlich sind. Im Falle des nicht-bedienerbetreuten Werkstückbearbeitungsbetriebsmodus erfolgt ein Hinweis an den Maschinenbediener, wie lange oder bis wann die Maschine mannlos laufen kann und warum dann ein Bedienereingriff notwendig wird. Nach dem Umschalten in den nicht-bedienerbetreuten Werkstückbearbeitungsbetriebsmodus kann auch eine Meldung an den Maschinenbediener gegeben werden, durch welchen jetzt vorgezogenen Bedienereingriff der Betrieb der Bearbeitungsmaschine im nicht-bedienerbetreuten Werkstückbearbeitungsbetriebsmodus verlängert werden kann.

Erfindungsgemäß kann zwischen einem Werkstückbearbeitungsbetriebsmodus mit Bediener (z.B. Tagschicht) und einem Werkstückbearbeitungsbetriebsmodus ohne Bediener (z.B. Nachtschicht) umgeschaltet werden. Es sind jedoch auch weitere Werkstückbearbeitungsbetriebsmodi denkbar wie z.B.
- Wochenendschicht,
- kurzzeitiger Mannlosbetrieb, beispielsweise wegen Störungsbehebung an einer anderen Maschine,
- Einfachbetrieb für ungelernte Bediener. In diesem Fall würde die Maschine beispielsweise diejenigen Einzelmaßnahmen durchführen, die eine Erhöhung der Prozesssicherheit herbeiführen und Fehlerkorrekturmechanismen (Fehlschnitte, Kollisionen) automatisch anwenden, so dass der Maschinenbediener nur noch einfache Wartungsarbeiten, Be- und Entladungen durchführen muss. Ein "Check in die Zukunft" kann dann anzeigen, wann kompliziere Wartungsarbeiten notwendig werden, d.h., wie lange der ungelernte Bediener an der Maschine ohne weitere Hilfe eines gelernten Bedieners voraussichtlich arbeiten kann.

Die vorab gespeicherten Betriebseinstellungen und/oder -vorgaben der verschiedenen Werkstückbearbeitungsbetriebsmodi können sich hinsichtlich Bearbeitungsreihenfolge und/oder Prozesssicherheit und/oder Qualität des Bearbeitungsergebnisses und/oder Bearbeitungsgeschwindigkeit und/oder Automatisierungsgrad voneinander unterscheiden. Dabei wird ein Werkstückbearbeitungsbetriebsmodus mit geringer Bedienereingriffsanforderung beispielsweise eine höhere Prozesssicherheit und/oder eine geringere Bearbeitungsgeschwindigkeit und/oder einen höheren Automatisierungsgrad als ein Werkstückbearbeitungsbetriebsmodus mit höherer Bedienereingriffsanforderung aufweisen.

Auch können Benutzerinteraktionen, die in einem betreuten Werkstückbearbeitungsbetriebsmodus sinnvoll sind, beim nicht-bedienerbetreuten Werkstückbearbeitungsbetriebsmodus automatisch zum Zeitpunkt des Umschaltens in die Zukunft schauend geprüft werden und dann für alle umgehbaren Interaktionen Alternativlösungen aktiviert werden, die ohne den Maschinenbediener auskommen. Treten trotzdem Zustände ein, die einen Bedienereingriff erfordern, so wird automatisch dafür eine angepasste Kommunikationsform gewählt.

Das Umschalten zwischen zwei verschiedenen Werkstückbearbeitungsbetriebsmodi kann entweder manuell durch den Maschinenbediener, beispielsweise durch Betätigen eines entsprechenden Knopfes an der Bearbeitungsmaschine, oder aber zeitgesteuert oder über Femzugriff erfolgen. Im letzteren Fall wird bevorzugt für jeden Werstückbearbeitungsbetriebsmodus vorab auch gespeichert, ob bzw. welche Informationen über den Maschinenbetrieb per Fernzugriff übertragen werden.

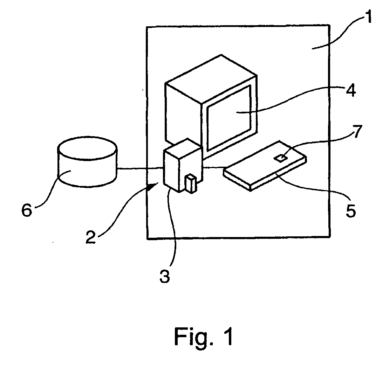

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die einzige Figur zeigt eine zum Durchführen des erfindungsgemäßen Verfahrens geeignete Bearbeitungsmaschine 1 in Form einer Werkzeugmaschine. Bei dieser Werkzeugmaschine 1 kann es sich beispielsweise um eine Maschine zum 2-D-Laserschneiden, zum Laser-Rohrschneiden, zum Stanzen, zur Stanz-LaserBearbeitung oder zum Biegen von Werkstücken handeln.

Die Werkzeugmaschine 1 wird jeweils mithilfe einer numerischen Maschinensteuerung 2 gesteuert, die hardwareseitig ein HMI(Human Machine Interface)-

Bediensystem mit einem als Industrie-PC ausgebildeten Steuerungscomputer 3 und einer Bedieneinrichtung mit einem Bildschirm als Maschinenanzeige (Maschinenbedienoberfläche) 4 und einer Eingabeeinheit (Tastatur, Maus oder Touchpanel) 5 umfasst. Statt auf dem Industrie-PC kann die Maschinensteuerung auch verteilt auf anderen Steuerungen laufen.

Die Werkzeugmaschine 1 kann in verschiedenen Betriebsmodi betrieben werden, welche sich voneinander hinsichtlich der Bedienereingriffsanforderungen an einen Maschinenbediener unterscheiden. In einem Datenspeicher 6 sind für jeden Betriebsmodus der Bearbeitungsmaschine 1 vorab Betriebseinstellungen und/oder -vorgaben gespeichert, welche für vom Maschinenbediener anforderbare Bedienereingriffe spezifisch sind. Diese gespeicherten Betriebseinstellungen und/oder -vorgaben der verschiedenen Betriebsmodi unterscheiden sich hinsichtlich Bearbeitungsreihenfolge und/oder Prozesssicherheit und/oder Qualität des Bearbeitungsergebnisses und/oder Bearbeitungsgeschwindigkeit und/oder Automatisierungsgrad voneinander; es handelt sich dabei somit um Betriebsmodi zur Werkstückbearbeitung, kurz: Werkstückbearbeitungsbetriebsmodi. So weist beispielsweise ein Werkstückbearbeitungsbetriebsmodus mit geringerer Bedienereingriffsanforderung eine höhere Prozesssicherheit, eine geringere Bearbeitungsgeschwindigkeit und einen höheren Automatisierungsgrad als ein Werkstückbearbeitungsbetriebsmodus mit höherer Bedienereingriffsanforderung an auf.

Im Folgenden wird das Umschalten von einem bedienerbetreuten ersten Werkstückbearbeitungsbetriebsmodus in einen nicht-bedienerbetreuten zweiten Werkstückbearbeitungsbetriebsmodus ("mannlos Betrieb") beschrieben.

Durch Drücken eines Knopfes 7 an der Eingabeeinheit 4 schaltet der Maschinenbediener die Werkzeugmaschine 1 in den nicht-bedienerbetreuten Werkstückbearbeitungsbetriebsmodus um. Genauer gesagt bewirkt das Drücken des Knopfes 7, dass die Maschinensteuerung 2 den Betrieb der Bearbeitungsmaschine 1 entsprechend der vorab gespeicherten Betriebseinstellungen und/oder-vorgaben des nicht-bedienerbetreuten Werkstückbearbeitungsbetriebsm odus umstellt.

Im nicht-bedienerbetreuten Werkstückbearbeitungsbetriebsmodus sind die Betriebseinstellungen bzw. Betriebsparameter der Maschinenkomponenten mit folgendem Ziel gewählt:
- erhöhte Prozesssicherheit z.B. durch häufigere Selbstkalibrationen, Slow&Safe-Maschinenbetrieb etc.
- systematische Verwendung der Automatisierung, wodurch die Anzahl der benötigten Bedienereingriffe verringert oder verzögert wird (z.B. durch automatischen Schneidkopf- und Düsenwechsel, häufigere Rekalibrierungen zur automatischen Behebung von Fehlern, häufigere Reinigungen etc., Verwenden von Betriebsmittelreserven),
- Verwenden von Bearbeitungsstrategien, die für einen längeren Mannlosbetrieb sorgen können (Setzen von Microjoints und restgitterfreies Bearbeiten zur Erhöhung der Prozesssicherheit bzw. Verringerung oder Verzögerung notwendiger manueller Eingriffe).

Die Maschinensteuerung 2 gibt über die Maschinenanzeige 4 eine Rückmeldung an den Maschinenbediener aus, ob die Umschaltung in den nicht-bedienerbetreuten Werkstückbearbeitungsbetriebsmodus erfolgreich erfolgt ist oder ob zur Finalisierung der Umschaltung noch Bedienereingriffe erforderlich sind. Außerdem führt die Maschinensteuerung 2 bei der Umschaltung in den nicht-bedienerbetreuten Werkstückbearbeitungsbetriebsmodus auch einen "Check in die Zukunft" durch, um bereits jetzt absehbare kommende Störungen vorwegzunehmen und die ideale Vorbereitung der Werkzeugmaschine 1 für die Mannlos-Phase sicherzustellen.

Dieser "Check in die Zukunft" kann beispielsweise beinhalten:
- Abprüfung des Produktionsplanes auf Durchführbarkeit (alle hierfür erforderlichen Maschinenkomponenten, wie z.B. Werkzeuge, sowie Material verfügbar und einwechselbar; Bearbeitungsaufträge ausreichend vorha nden für eine sinnvoll lange Mannlos-Phase);
- Abprüfung auf anstehende Wartungsaufgaben in der Mannlos-Phase;
- Abprüfung auf ausreichenden Füllstand der Betriebsmittel. Bei Bedarf wird der Bediener aufgefordert, dies zu prüfen.
- Abfrage der Zustände von Maschinenkomponenten und Empfehlung für einen vorbeugenden Tausch.

Nach erfolgreicher Umschaltung in den nicht-bedienerbetreuten Werkstückbearbeitungsbetriebsmodus zeigt die Maschinensteuerung 2 dem Maschinenbediener über die Maschinenanzeige 4 auch noch an, durch welchen jetzt schon vorgezogenen Bedienereingriff der Betrieb der Werkzeugmaschine 1 im nicht-bedienerbetreuten Werkstückbearbeitungsbetriebsmodus verlängert werden kann.

Die folgende Tabelle zeigt verschiedene Betriebseinstellungen im bedienerbetreuten Normalbetriebsmodus und im nicht-bedienerbetreuten Mannlos-Betriebsmodus einer Laserschneidmaschine zum Schneiden von Werkstücken aus einer Blechtafel.

**Tabelle**

| Einzelmaßnahme | Normalbetrieb | Mannlosbetrieb |
|---|---|---|
| Kalibrierung Abstandssensorik | längeres Intervall y | kürzeres Intervall x |
| Düsenmittigkeitsprüfung | längeres Intervall y | kürzeres Intervall x |
| Düsenreinigung | längeres Intervall y | kürzeres Intervall x |
| Slow&safe Betrieb (z.B. niedrigere Geschwindigkeit, Leistung) | nein | ja |
| Skip part (Werkstück überspringen, z.B. bei Schnittfehler, Einstechfehler) | nein | ja |
| Skip sheet (Blechtafel überspringen, z.B. wenn richtige Werkzeuge nicht gerüstet, richtige Blechtafel nicht in Lageranbind ung) | nein | ja |
| Anzahl Retry part (Wiederstart Schneiden) | 1 | 3 |
| Anzahl Retry sheet | 1 | 1 |
| Düsenwechsel (gleiche Düse, z.B. bei mehreren skip part Fehlern, max. Schneidzeit einer Düse) | nein | ja |
| Schneidkopfwechsel (auf gleichartigen Schneid kopf) | nein | ja |
| Automatisches Versenden von Nachrichten per SMS, Fax oder E-Mail im Fehlerfall) | nein | ja |
| Verhalten bei Betriebsmittel leer | Stopp | Toleranzvorgabe |
| Zustandskontrolle Auflage | nein | ja |
| Verhalten bei Auslösung Linsenüberwachung | Stopp | z.B. automatischer Schneidkopfwechsel mit neuer Linse |
| | | |
| Automatisch Beladen aktiv | ja | ja |
| Automatisch Entladen Blechtafel aktiv | nein | ja |
| Automatisch Entladen Restgitter | ja | ja |
| Entladeposition | 2 (manuell) | 1 (automatisch) |
| Rücklagerung in Lager ( → ausreichende Kapazität für Gutteile der Produktion einer Nacht/eines Wochenendes sicherstellen) | nein | ja |
| SortMaster (=System mit Gruppe von Entladebehältern, zum Sortieren ausgeschleuster Teile) aktiv | ja | ja |
| Restgitterzerschneiden | Normale Größe der Restgitterstücke | Zerschneiden in kleinere Restgitterstücke → zuverlässigere Entsorgung bei mehr Zeitaufwand |
| Ausbilden von M icrojoints (keine Gefahr des Teileverkippens; Blechtafel, die sonst manuell abgeräumt werden muss, kann nach Bearbeitung komplett von Automatisierung entnommen werden) | nein | ja |

## Patentansprüche

1. Verfahren zum Umschalten zwischen verschiedenen Werkstückbearbeitungsbetriebsmödi einer Bearbeitungsmaschine (1), welche sich voneinander hinsichtlich der Bedienereingriffsanforderungen an einen Maschinenbediener unterscheiden,
wobei für jeden Werkstückbearbeitungsbetriebsmodus der Bearbeitungsmaschine (1) vorab Betriebseinstellungen und/oder -vorgaben für vom Maschinenbediener anforderbare Bedienereingriffe gespeichert werden,
wobei beim Umschalten von einem ersten Werkstückbearbeitungsbetriebsmodus in einen zweiten Werkstückbearbeitungsbetriebsmodus der Betrieb der Bearbeitungsmaschine (1) entsprechend der vorab gespeicherten Betriebseinstellungen und/oder -vorgaben des zweiten Werkstückbearbeitungsbetriebsmodus umgestellt wird und eine Rückmeldung an den Maschinenbediener gegeben wird, ob die Umschaltung erfolgreich erfolgt ist oder ob zur Finalisierung der Umschaltung noch Bedienereingriffe erforderlich sind, und wobei zwischen einem bedienerbetreuten ersten Werkstückbearbeitungsbetriebsmodus und einem nicht-bedienerbetreuten zweiten Werkstückbearbeitungsbetriebsmodus umgeschaltet wird,
**dadurch gekennzeichnet,**
**dass** nach dem Umschalten in den zweiten Werkstückbearbeitungsbetriebsmodus eine Rückmeldung an den Maschinenbediener gegeben wird, ob oder wann ein nächster Bedienereingriff erforderlich wird, und/oder nach dem Umschälten in den zweiten Werkstückbearbeitungsbetriebsmodus eine Meldung an den Maschinenbediener gegeben wird, durch welchen vorgezogenen Bedienereingriff der Betrieb der Bearbeitungsmaschine (1) im zweiten Werkstückbearbeitungsbetriebsmodus verlängert werden kann.

2. Verfahren nach Anspruch 1, **dadurch gekennzeichnet, dass** sich die vorab gespeicherten Betriebseinstellungen und/oder -vorgaben der verschiedenen Werkstückbearbeitungsbetriebsmodi hinsichtlich Bearbeitungsreihenfolge und/oder Prozesssicherheit und/oder Qualität des Bearbeitungsergebnisses und/oder Bearbeitungsgeschwindigkeit und/oder Automatisierungsgrad voneinander unterscheiden.

3. Verfahren nach einem der vorhergehenden Ansprüche, **dadurch gekennzeichnet, dass** ein Werkstückbearbeitungsbetriebsmodus mit geringerer Bedienereingriffsanforderung an den Maschinenbediener eine höhere Prozesssicherheit und/oder eine geringere Bearbeitungsgeschwindigkeit und/oder einen höheren Automatisierungsgrad als ein Werkstückbearbeitungsbetriebsmodus mit höherer Bedienereingriffsanforderung aufweist.

4. Verfahren nach einem vorhergehenden Ansprüche, **dadurch gekennzeichnet, dass** das Umschalten zwischen zwei verschiedenen Werkstückbearbeitungsbetriebsmodi durch den Maschinenbediener erfolgt.

5. Verfahren nach einem der Ansprüche 1 bis 3, **dadurch gekennzeichnet, dass** das Umschalten zwischen zwei verschiedenen Werkstückbearbeitungsbetriebsmodi zeitgesteuert oder über Fernzugriff erfolgt.

6. Verfahren nach einem vorhergehenden Ansprüche, **dadurch gekennzeichnet, dass** für jeden Werkstückbearbeitungsbetriebsmodus vorab auch gespeichert wird, ob oder welche Informationen über den Maschinenbetrieb per Fernzugriff übertragen werden.

## Claims

1. Method for switching between different workpiece processing operating modes of a processing machine (1) which differ from one another in respect of the operator intervention requirements of a machine operator, wherein for each workpiece processing operating mode of the processing machine (1), operating settings and/or parameters which can be required of the machine operator are stored beforehand,
wherein on switching from a first workpiece processing operating mode to a second workpiece processing operating mode, the operation of the processing machine (1) is changed in accordance with the previously stored operating settings and/or parameters of the second workpiece processing operating mode, and feedback is given to the machine operator in respect of whether switching has been successfully completed or whether operator interventions are still required in order to finalise switching, and
wherein switching takes place between an operator-attended first workpiece processing operating mode and a non-operator-attended second workpiece processing operating mode,
**characterized in that**
after switching to the second workpiece processing operating mode, feedback is given to the machine operator in respect of whether or when the next operator intervention will be required and/or after switching to the second workpiece processing operating mode, a message is given to the machine operator by which early operator intervention the operation of the processing machine (1) in the second workpiece processing operating mode can be extended.

2. Method according to claim 1, **characterised in that** the previously stored operating settings and/or parameters of the different workpiece processing operating modes differ from one another in respect of processing sequence and/or process safety and/or quality of the processing result and/or processing speed and/or degree of automation.

3. Method according to any one of the preceding claims, **characterised in that** a workpiece processing operating mode with a lower operator intervention requirement of the machine operator has a higher process safety and/or a lower processing speed and/or a higher degree of automation than a workpiece processing operating mode with a higher operator intervention requirement.

4. Method according to any one of the preceding claims, **characterised in that** switching between two different workpiece processing operating modes is carried out by the machine operator.

5. Method according to any one of claims 1 to 3, **characterised in that** switching between two different workpiece processing operating modes takes place in a time-controlled manner or by remote access.

6. Method according to any one of the preceding claims, **characterised in that**, for each workpiece processing operating mode, details are also stored beforehand in respect of whether and what information about the machine operation is transferred by remote access.

## Revendications

1. Procédé de commutation entre différents modes de fonctionnement d'usinage de pièces d'une machine d'usinage (1), lesquels diffèrent les uns des autres en ce qui concerne les demandes d'interventions d'opérateur adressées à un opérateur de la machine,
des paramètres et/ou consignes de fonctionnement pour des interventions d'opérateur pouvant être demandées à l'opérateur de la machine étant préalablement mémorisés pour chaque mode de fonctionnement d'usinage de pièces de la machine d'usinage (1),
le fonctionnement de la machine d'usinage (1) étant, lors de la commutation d'un premier mode de fonctionnement d'usinage de pièces dans un deuxième mode de fonctionnement d'usinage de pièces, modifié conformément aux paramètres et/ou consignes de fonctionnement préalablement mémorisés du deuxième mode de fonctionnement d'usinage de pièces et une information étant envoyée à l'opérateur de la machine pour lui indiquer si la commutation a été effectuée avec succès ou si des interventions d'opérateur sont encore nécessaires pour finaliser la commutation, et
une commutation étant effectuée entre un premier mode de fonctionnement d'usinage de pièces surveillé par un opérateur et un deuxième mode de fonctionnement d'usinage de pièces non surveillé par un opérateur,
**caractérisé en ce**
**qu'**après la commutation dans le deuxième mode de fonctionnement d'usinage de pièces, une information est envoyée à l'opérateur de la machine pour lui indiquer si ou quand la prochaine intervention d'opérateur est nécessaire, et/ou après la commutation dans le deuxième mode de fonctionnement d'usinage de pièces, un message est envoyé à l'opérateur de la machine pour lui indiquer par quelle intervention d'opérateur anticipée le fonctionnement de la machine d'usinage (1) dans le deuxième mode de fonctionnement d'usinage de pièces peut être prolongé.

2. Procédé selon la revendication 1, **caractérisé en ce que** les paramètres et/ou consignes de fonctionnement préalablement mémorisés des différents modes de fonctionnement d'usinage de pièces diffèrent les uns des autres en ce qui concerne l'ordre d'usinage et/ou la sécurité du processus et/ou la qualité du résultat d'usinage et/ou la vitesse d'usinage et/ou le degré d'automatisation.

3. Procédé selon l'une des revendications précédentes, **caractérisé en ce qu'**un mode de fonctionnement d'usinage de pièces avec demande d'interventions d'opérateur plus faible à l'opérateur de la machine présente une sécurité de processus plus élevée et/ou une vitesse d'usinage plus faible et/ou un degré d'automatisation plus élevé qu'un mode de fonctionnement d'usinage de pièces avec demande d'interventions d'opérateur plus élevée.

4. Procédé selon l'une des revendications précédentes, **caractérisé en ce que** la commutation entre deux modes de fonctionnement d'usinage de pièces différents est effectuée par l'opérateur de la machine.

5. Procédé selon l'une des revendications 1 à 3, **caractérisé en ce que** la commutation entre deux modes de fonctionnement d'usinage de pièces différents est effectuée en fonction du temps ou via un accès à distance.

6. Procédé selon l'une des revendications précédentes, **caractérisé en ce que** pour chaque mode de fonctionnement d'usinage de pièces, il est préalablement mémorisé aussi si ou quelles informations sur le fonctionnement de la machine sont transmises par accès à distance.
